Europäisches Patentamt

European Patent Office

Office européen des brevets

(19)

(11) **EP 1 327 975 B1**

(12) **EUROPÄISCHE PATENTSCHRIFT**

(45) Veröffentlichungstag und Bekanntmachung des
Hinweises auf die Patenterteilung:
**08.11.2006   Patentblatt 2006/45**

(51) Int Cl.:
*G10L 15/08* *(2006.01)*      *G10L 15/14* *(2006.01)*

(21) Anmeldenummer: **03003961.4**

(22) Anmeldetag: **13.08.1998**

(54) **Verarbeitung eines Sprachsignals**

Processing of a speech signal

Traitement d'un signal de parole

(84) Benannte Vertragsstaaten:
**AT BE CH DE FR GB IT LI NL**

(30) Priorität: **12.09.1997   DE 19740175**

(43) Veröffentlichungstag der Anmeldung:
**16.07.2003   Patentblatt 2003/29**

(62) Dokumentnummer(n) der früheren Anmeldung(en)
nach Art. 76 EPÜ:
**98115323.2 / 0 902 417**

(73) Patentinhaber: **SIEMENS
AKTIENGESELLSCHAFT
80333 München (DE)**

(72) Erfinder:
 • **Gzara, Samir
 Nouvelle Medina,
 Ben Arous 2063 (TN)**
 • **Lucioni, Gonzalo, Dr.
 58454 Witten (DE)**

(56) Entgegenhaltungen:
 • **KATOH M ET AL: "A STUDY ON VITERBI BEST-FIRST SEARCH FOR ISOLATED WORD RECOGNITION USING DURATION-CONTROLLED HMM" ICSLP 94: 1994 INTERNATIONAL CONFERENCE ON SPOKEN LANGUAGE PROCESSING. YOKOHAMA, JAPAN, SEPT. 18 - 22, 1994, INTERNATIONAL CONFERENCE ON SPOKEN LANGUAGE PROCESSING. (ICSLP), YOKOHAMA: ASJ, JP, Bd. 1, 18. September 1994 (1994-09-18), Seiten 263-266, XP000669670**
 • **RABINER L R: "A TUTORIAL ON HIDDEN MARKOV MODELS AND SELECTED APPLICATIONS IN SPEECH RECOGNITION" PROCEEDINGS OF THE IEEE, IEEE. NEW YORK, US, Bd. 77, Nr. 2, 1. Februar 1989 (1989-02-01), Seiten 257-285, XP000099251 ISSN: 0018-9219**
 • **SUAUDEAU N ET AL: "Sound duration modelling and time-variable speaking rate in a speech recognition system" EUROSPEECH '93, 1993, Seiten 307-310, XP008015602**
 • **POWER K: "Durational modelling for improved connected digit recognition" SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, 3. Oktober 1996 (1996-10-03), Seiten 885-888, XP010237761 ISBN: 0-7803-3555-4**
 • **LEE C H ET AL: "A network-based frame-synchronous level building algorithm for connected word recognition" PROC. IEEE INTERNATIONAL CONFERENCE ON ACOUSTICS, SPEECH AND SIGNAL PROCESSING, Seiten 11-14,**

EP 1 327 975 B1

**Beschreibung**

Die Erfindung betrifft ein Verfahren zur Verarbeitung eines Sprachsignals, bei dem für mindestens zwei Referenzworte mit einem oder mehreren ähnlichen Wortbestandteilen ein erstes Wortmodell und ein zweites Wortmodell mit aufeinanderfolgenden Zuständen für die Wortbestandteile festgelegt werden, vorzugsweise sogenannte "Hidden-Markov"-Modelle. Zu jedem Zustand gehört mindestens ein Referenzvektor, dessen Komponenten die Ausprägung von Merkmalen in einem zum jeweiligen Zustand gehörenden Referenzsignal angeben. Im ersten Wortmodell ist ein erster Zustand für den ähnlichen Wortbestandteil im ersten Referenzwort und im zweiten Wortmodell ist ein zweiter Zustand für den ähnlichen Wortbestandteil im zweiten Referenzwort festgelegt.

Ein beim Sprechen eines Wortes erzeugtes Sprachsignal wird in aufeinanderfolgende Signalabschnitte unterteilt, und für jeden Signalabschnitt wird ein Vergleichsvektor erzeugt, dessen Komponenten die Ausprägung der Merkmale im jeweiligen Signalabschnitt angeben. Die Vergleichsvektoren werden in der zeitlichen Reihenfolge ihrer Signalabschnitte nacheinander bearbeitet, wobei für vorbestimmte Zustände aus dem zugehörigen Referenzvektor und aus dem aktuellen Vergleichsvektor ein aktuelles lokales Abweichungsmaß berechnet wird, dessen Wert mit zunehmender Abweichung des Vergleichsvektors vom Referenzvektor zunimmt. Außerdem wird für jeden Zustand ein aktuelles Hilfsabweichungsmaß berechnet. Das zuletzt erzeugte Hilfsabweichungsmaß des letzten Zustands eines Wortmodells gibt als Wortabweichungsmaß die Abweichung des gesprochenen Wortes zum durch das jeweilige Wortmodell modellierte Referenzwort an. Nach dem vollständigen Bearbeiten des Sprachsignals wird als das gesprochene Wort dasjenige Referenzwort erkannt, welches das kleinste Wortabweichungsmaß hat.

Ein derartiges Verfahren mit "Hidden-Markov"-Modellen ist z.B. in dem folgenden Buch erläutert: "Automatische Spracherkennung - Methoden der Klassifikation und Merkmalsextraktion", G. Ruske, 2. Aufl., R. Oldenbourg, München 1994, Seiten 178 bis 182. Ein Nachteil des bekannten Verfahrens besteht darin, daß bei akustisch ähnlichen Wörtern oft Verwechslungen auftreten. Ein weiterer Nachteil dieses bekannten Verfahrens besteht darin, daß lange Phoneme bzw. Wortbestandteile aufgrund ihrer langen Sprechdauer mehr zur Unterscheidung von Worten beitragen als kurze Phoneme. Dies ist jedoch oft die Ursache für Fehlentscheidungen.

Die Dokumente "A study on Viterbi best-first search for isolated word recognition using duration-controlled HMM", M. katoh et al, ICSLP' 94, und "A network-based frame synchronous level building algorithm for connected word recognition", C. Lee et al, ICASSP' 98, schlagen vor, ein sogennantes, "Duration Controlled Hidden-Markov-Model" zur Spracherkennung einzusetzen, wobei eine Verweildauer im jeweiligen Zustand ein Maß für die Wahrscheinlichkeit eines bevorstehenden Wechsels des Zustands darstellt.

Die Verwendung einer Zustandsdauer des zu analysieren den Wortes zur Schärfung der Erkennung in der HMM-gestützten Spracherkennung ist dann bekannt, führt aber zu einer exorbitanten Erhöhung der erforderlichen Rechenzeit.

Es ist Aufgabe der Erfindung ein einfaches Verfahren zur Verarbeitung eines Sprachsignals anzugeben, das eine hohe Erkennungsrate hat bzw. bei dem die Anzahl der falsch erkannten Wörter klein ist.

Diese Aufgabe wird durch eine Verfahren mit den Merkmalen des Patentanspruchs 1 gelöst. Vorteilhafte Weiterbildungen dieses Verfahrens sind in den auf den Anspruch 1 rückbezogenen Unteransprüchen angegeben.

Beim erfindungsgemäßen Verfahren wird von der Überlegung ausgegangen, daß die Sprechdauer eines Phonems nur bedingt zur Unterscheidung von Worten genutzt werden kann. Dies ist z.B. darauf zurückzuführen, daß die Sprechdauer sprecherabhängig bei der Aussprache des gleichen Wortes stark schwankt. Eine Verfälschung des Erkennungsergebnisses durch die unterschiedliche Sprechdauer der Phoneme muß also vermieden werden.

Deshalb wird beim erfindungsgemäßen Verfahren beim Berechnen der aktuellen lokalen Abweichungsmaße mindestens eines ausgewählten Zustands eine Verweildauer berücksichtigt, die ein Maß für den Anteil der Sprechdauer des durch den ausgewählten Zustand modellierten Wortbestandteils an der Sprechdauer des gesprochenen Wortes ist. Ist z.B. jedem Zustand als Wortbestandteil ein Phonem zugeordnet, so bedeutet dies, daß für den ausgewählten Zustand die mittlere Sprechdauer des jeweiligen Phonems berücksichtigt wird. Durch diese Maßnahme verringerte sich die Anzahl von falsch erkannten Worten um etwa 10 bis 15 %. Der Rechenaufwand erhöht sich gegenüber dem bekannten Verfahren beim Verfahren nach der Erfindung nicht, da sich das Berücksichtigen der Verweildauer in der Veränderung einer ohnehin verwendeten Konstanten ausdrückt. Die Verweildauer wird vorzugsweise mit Hilfe von Messungen ermittelt, bei denen z.B. 200 Sprecher die Worte des Wortschatzes mehrmals aussprechen.

Die Erfindung betrifft gemäß Anspruch 4 außerdem eine Sprachverarbeitungseinheit, in der die Verweildauer ebenfalls berücksichtigt wird. Somit gelten die eben genannten technischen Wirkungen beim Berücksichtigen der Verweildauer auch für die Sprachverarbeitungseinheit.

Im folgenden werden Ausführungsbeispiele der Erfindung an Hand der beiliegenden Zeichnungen erläutert. Darin zeigen:

Figur 1     die Berechnung von Hilfsabweichungsmaßen für zwei Wortmodelle der Referenzworte "drei" und "Brei",

Figur 2    eine weitere Art der Berechnung der Hilfsabweichungsmaße für die Wortmodelle der Referenzworte "drei" und "Brei",

Figur 3    ein sogenanntes Trellis-Diagramm für das Wortmodell des Referenzwortes "drei", und

Figur 4    die Berechnung von Hilfsabweichungsmaßen für das Wortmodell des Referenzwortes "drei" unter Berücksichtigung der Sprechdauer für Wortbestandteile.

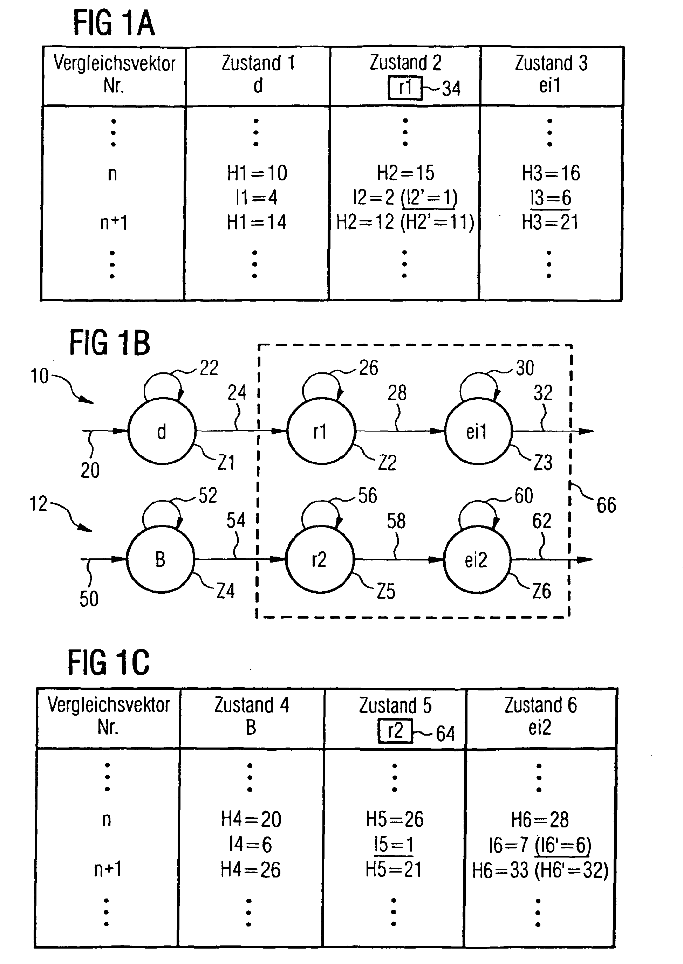

Figur 1 zeigt in Teilen a und c die Berechnung von Hilfsabweichungsmaßen für in einem Teil b gezeigte Wortmodelle 10 und 12. Das Wortmodell 10 ist ein sogenanntes "Hidden-Markov"-Modell zur Modellierung eines Referenzwortes "drei". Auch das Wortmodell 12 ist ein "Hidden-Markov"-Modell, jedoch zur Modellierung eines Referenzwortes "Brei".

Das Wortmodell 10 für das Referenzwort "drei" hat drei Zustände Z1, Z2 und Z3. Dem Zustand Z1 ist aus Gründen der Vereinfachung nur ein Referenzvektor d zugeordnet, dessen Komponenten die wahrscheinliche Ausprägung vorgegebener Merkmale bei der Aussprache des Buchstabens "d" im Wort "drei" angeben. Zu den Merkmalen gehören z.B. die Ausprägungen von Frequenzen innerhalb vorgegebener Frequenzbereiche in einem aufgenommenen Sprachsignal. So könnte der Referenzvektor d aus einem Spannungsverlauf erzeugt worden sein, der beim Aussprechen des Buchstabens "d" am Beginn des Wortes "drei" erzeugt wird, dargestellt durch einen Übergangspfeil 20. Der Referenzvektor d ist nur auf eine Sprechzeit von 10 ms bezogen, so daß der Zustand Z1 mehrmals hintereinander auftritt, sobald mit der Aussprache des Wortes "drei" begonnen wird, vgl. Übergangspfeil 22. Ein Übergangspfeil 24 zeigt den Übergang vom Zustand Z1 zum Zustand Z2 an, wenn nach der Aussprache des Wortbestandteils "d" die Aussprache des Wortbestandteils "r" folgt. Somit gehört der Zustand 2 zum Wortbestandteil "r". Ein Referenzvektor r1, der mit hoher Wahrscheinlichkeit die Ausprägung der betrachteten Merkmale beim Aussprechen des Wortbestandteils "r" im Wort "drei" angibt, ist dem Zustand Z2 zugeordnet.

Wann der Übergang vom Zustand Z1 zum Zustand Z2 erfolgt, hängt zum einen vom Sprecher und zum anderen auch von der momentanen Aussprache des Sprechers ab. Somit können nur Wahrscheinlichkeiten für den Übergang vom Zustand Z.1 zum Zustand Z2 angegeben werden. Diese Wahrscheinlichkeiten werden experimentell ermittelt. Im Ausführungsbeispiel wird angenommen, daß die Wahrscheinlichkeiten für die durch die Übergangspfeile 20 bis 24 und die im folgenden erläuterten Übergangspfeile des Wortmodells 10 den gleichen Wert haben.

Dem Zustand Z2 kann wiederum der Zustand Z2 selbst folgen, vgl. Übergangspfeil 26. Alternativ kann jedoch auch nach dem Zustand Z2 der Zustand Z3 folgen, wie es durch einen Übergangspfeil 28 angedeutet ist. Der Zustand Z3 enthält einen Referenzvektor ei1, der dem Wortbestandteil "ei" im Wort "drei" zugeordnet ist. Nach dem Zustand Z3 folgt entweder wiederum der Zustand Z3, vgl. Übergangspfeil 30, oder die Aussprache des Wortes "drei" wird beendet. In letzterem Fall wird der Zustand Z3 verlassen, vgl. Übergangspfeil 32.

Mit dem Wortmodell 10 kann eine Referenzvektorfolge erzeugt werden, indem die Zustände Z1 bis Z3 entlang der Übergangspfeile 20 bis 32 z.B. von einem Programm durchlaufen werden. Die beim Durchlaufen der Zustände Z1 bis Z3 generierten Referenzvektoren werden dann mit einer Folge von Vergleichsvektoren verglichen, die aus dem zu verarbeitenden Sprachsignal erzeugt worden sind. Durch Vergleich der Folge von Referenzvektoren mit der Folge von Vergleichsvektoren kann ein Abweichungsmaß für das Wort "drei" berechnet werden, das die Abweichung des gesprochenen Wortes vom Referenzwort "drei" des Wortmodells 10 angibt. Die Anzahl der aus dem Wortmodell 10 erzeugbaren Folgen von Referenzvektoren ist jedoch sehr groß. Zur Verringerung des Rechenaufwandes ist es bekannt, z.B. den sogenannten Viterbi-Algorithmus einzusetzen, um die Referenzvektorfolge aus dem Wortmodell 10 zu bestimmen, welche die kleinste Abweichung zur Folge der Vergleichsvektoren hat.

Im oberen Teil a der Figur 1 ist eine Tabelle gezeigt, mit der die Bearbeitung eines Vergleichsvektors n beim Durchführen einer einfachen Variante des Viterbi-Algorithmus erläutert werden soll. Der aktuell bearbeitete Vergleichsvektor n, n+1 ist in der linken Spalte der Tabelle eingetragen. Die zweite Spalte der Tabelle bezieht sich auf den Zustand Z1 mit dem Referenzvektor d. Die dritte Spalte betrifft Werte, die für den Zustand Z2, d.h. mit Hilfe des Referenzvektors r1, berechnet werden. Die rechte Spalte der Tabelle betrifft den Zustand Z3, d.h. den Referenzvektor ei1. Beim Bearbeiten des Vergleichsvektors n werden die in der entsprechenden Zeile dargestellten alten Hilfsabweichungsmaße H1 bis H3 für die Zustände Z1 bis Z3 verwendet. Die Berechnung neuer bzw. aktueller Hilfsabweichungsmaße H1 bis H3 für die Bearbeitung des Vergleichsvektors n+1 wird im folgenden erläutert.

Dazu sei angenommen, daß zu Beginn der Bearbeitung des Vergleichsvektors n die alten Hilfsabweichungsmaße H1 bis H3 für die Zustände Z1 bis Z3 bekannt sind. Der Wertebereich der Hilfsabweichungsmaße liegt etwa zwischen 0 am Anfang und 100 am Ende der Berechnung. Der Zustand Z1 hat das Hilfsabweichungsmaß H1=10. Der Zustand Z2 hat das Hilfsabweichungsmaß H2=15. Und der Zustand Z3 hat ein Hilfsabweichungsmaß H3=16. Weiterhin sei angenommen, daß der Vergleichsvektor n aus einem Sprachsignalabschnitt erzeugt worden ist, der bei der Aussprache des Wortbestandteils "r" im Wort "drei" entstanden ist, vgl. Hervorhebung 34.

Aus dem Vergleichsvektor n und dem Referenzvektor d wird ein aktuelles lokales Abweichungsmaß 11 für den Zustand Z1 ermittelt, das im Ausführungsbeispiel den numerischen Wert "4" hat. Das lokale Abweichungsmaß 11 ist z.B. der geometrische Abstand des Vergleichsvektors n vom Referenzvektor d. Ein genaueres lokales Abweichungsmaß 11 ergibt sich, wenn außerdem eine Wahrscheinlichkeitsfunktion berücksichtigt wird.

Auf gleiche Art und Weise wird aus dem Vergleichsvektor n und dem Referenzvektor r1 ein aktuelles lokales Abweichungsmaß 12=2 ermittelt. Die Abweichung des Vergleichsvektors n vom Referenzvektor d ist, wie bei der Aussprache des Wortbestandteils "r" erwartet, größer als die Abweichung des Vergleichsvektors n vom Referenzvektor r1. Ein aktuelles lokales Abweichungsmaß 13 für den Zustand Z3, d.h. für den Referenzvektor ei1 hat im Ausführungsbeispiel den numerischen Wert "6".

Die neuen Hilfsabweichungsmaße H1 bis H3 für die Bearbeitung des nächsten Vergleichsvektors n+1 werden unter Berücksichtigung des Wortmodells 10 ermittelt. Wie im Wortmodell 10 angegeben, kann der Zustand Z1 nur über den Übergangspfeil 20 oder den Übergangspfeil 22 erreicht werden. Der Einfluß des Übergangspfeils 20 wird nur in einer Startphase des Viterbi-Algorithmus für den ersten Vergleichsvektor beachtet. Für den Vergleichsvektor n, der zu einem Signalabschnitt gehört, der etwa in der Mitte des gesamten bei der Aussprache des Wortes "drei" erzeugten Signalverlaufs liegt, muß nur der Übergangspfeil 22 berücksichtigt werden. Als vorhergehender Zustand für den Zustand Z1 kommt somit nur der Zustand Z1 selbst in Frage. Die Berechnung des neuen Hilfsabweichungsmaßes H1 für die Bearbeitung des Vergleichsvektors n+1 erfolgt deshalb durch eine einfache Addition des aktuellen lokalen Abweichungsmaßes 11 für den Zustand Z1 zum alten Hilfsabweichungsmaß H1 für diesen Zustand. Es ergibt sich ein neues Hilfsabweichungsmaß H1=14.

Der Übergang zum Zustand Z2 kann ausgehend vom Zustand Z1 über den Übergangspfeil 24 oder ausgehend vom Zustand Z2 über den Übergangspfeil 26 erfolgen, der einen Selbstübergang angibt. Beim Berechnen des neuen Hilfsabweichungsmaßes H2 für den Zustand Z2 erfolgt deshalb ein Vergleich des alten Hilfsabweichungsmaßes H1 für den Zustand Z1 und des alten Hilfsabweichungsmaßes H2 für den Zustand Z2. Es wird festgestellt, daß der Zustand Z1 das kleinere Hilfsabweichungsmaß H1=10 hat. Zu diesem Hilfsabweichungsmaß H1 wird der Wert des lokalen Abweichungsmaßes 12 für den Zustand Z2 addiert. Das neue Hilfsabweichungsmaß H2 für den Zustand Z2 hat den numerischen Wert "12". Auf ähnliche Art ergibt sich für den Zustand Z3 aus dem Wortmodell 10, daß als vorhergehende Zustände nur der Zustand Z2 und der Zustand Z3 selbst in Frage kommen. Der Vergleich der alten Hilfsabweichungsmaße H2 und H3 für diese Zustände Z2 bzw. Z3 ergibt, daß das Hilfsabweichungsmaß H2=15 für den Zustand Z2 kleiner ist. Das aktuelle lokale Abweichungsmaß 13=6 des Zustands Z3 wird deshalb zum Wert des Hilfsabweichungsmaßes H2=15 für den Zustand Z2 addiert, um das neue Hilfsabweichungsmaß H3=21 für den Zustand Z3 zu erhalten.

Auf analoge Weise werden die auf den Vergleichsvektor n folgenden Vergleichsvektoren n+1 usw. bearbeitet, bis alle Vergleichsvektoren des ausgesprochenen Wortes bearbeitet worden sind. Das Hilfsabweichungsmaß H3 des Zustands Z3 für den letzten Vergleichsvektor gibt die Abweichung des gesprochenen Wortes vom mit dem Wortmodell 10 modellierten Referenzwort "drei" an und wird deshalb als Wortabweichungsmaß W10 bezeichnet.

Gibt es wie im Ausführungsbeispiel mehrere Referenzworte des Wortschatzes und damit noch andere Wortmodelle, so werden auch für die anderen Referenzworte Wortabweichungsmaße W berechnet, um dann das Wortabweichungsmaß W zu bestimmen, welches den kleinsten Wert hat.

Das im Teil b der Figur 1 gezeigte Wortmodell 12 hat drei Zustände Z4, Z5 und Z6, zu denen in dieser Reihenfolge Referenzvektoren B, r2 und ei2 gehören. Die Komponenten des Referenzvektors B enthalten die Ausprägung der vorgegebenen Merkmale, bei der Aussprache des Wortbestandteils "B" während der Aussprache des Wortes "Brei". Die Komponenten des Referenzvektors r2 enthalten die Ausprägung der gleichen Merkmalen bei der Aussprache des Wortbestandteils "r" des Wortes "Brei". Ebenso enthalten die Komponenten des Merkmalsvektors ei2 die Ausprägung der Merkmale bei der Aussprache des Wortbestandteils "ei" des Wortes "Brei". Der Referenzvektor r1 des Wortmodells 10 und der Referenzvektor r2 des Wortmodells 12 werden sich in der Regel etwas voneinander unterscheiden, da der Wortbestandteil "r" in den Worten "drei" und "Brei" etwas anders ausgesprochen wird. Auch unterscheiden sich die Referenzvektoren ei1 und ei2 voneinander.

Der Zustand Z4 wird über einen Übergangspfeil 50 erreicht, wenn mit der Modellierung begonnen wird. Ein Übergangspfeil 52 gibt einen Selbstübergang vom Zustand Z4 zu sich selbst an, d.h. wieder zum Zustand Z4. Ein Übergangspfeil 54 gibt den Übergang vom Zustand Z4 zum Zustand Z5 an. Der Selbstübergang vom Zustand Z5 zu sich selbst wird durch einen Übergangspfeil 56 dargestellt. Den Übergang vom Zustand Z5 zum Zustand Z6 verdeutlicht ein Übergangspfeil 58. Der Selbstübergang vom Zustand Z6 zum Zustand Z6 ist durch einen Übergangspfeil 60 dargestellt. Die Modellierung ist beendet, wenn der Zustand Z6 verlassen wird, vgl. Übergangspfeil 62.

Die Berechnung der Hilfsabweichungsmaße H4 bis H5 erfolgt nach dem bereits an Hand des Wortmodells 10 erläuterten Schema. Dabei ergeben sich jedoch andere Zahlenwerte. Eine Tabelle im unteren Teil c der Figur 1 zeigt Werte, die bei der Bearbeitung des Vergleichsvektors n mit Hilfe des Wortmodells 12 verwendet bzw. berechnet werden. Die linke Spalte der Tabelle in Teil c der Figur 1 zeigt wiederum den aktuell bearbeiteten Vergleichsvektors n, n+1 usw. Die zweite Spalte zeigt die aktuellen Hilfsabweichungswerte H4 und die lokalen Abweichungswerte 14 für den Zustand Z4, d.h. für den Referenzvektor B. Die dritte Spalte der Tabelle in Teil c der Figur 1 zeigt die Hilfsabweichungsmaße H5 und die lokalen Abweichungsmaße 15 für den Zustand Z5 bzw. für den Referenzvektor r2. Schließlich zeigt die vierte Spalte der Tabelle in Teil c der Figur 1 die Hilfsabweichungsmaße H6 und die lokalen Abweichungsmaße 16 für den Zustand Z6, d.h. für den Referenzvektor ei2.

Es sei wiederum angenommen, daß der Vergleichsvektor n bei der Aussprache des Wortbestandteils "r" im Wort "drei" entstanden ist, vgl. Hervorhebung 64. Die alten Hilfsabweichungsmaße H4 bis H6 für die Zustände Z4, Z5 und Z6 zu Beginn der Bearbeitung des Vergleichsvektors n sind sämtlich größer als die entsprechenden alten Hilfsabweichungsmaße H1 bis H3 in der oberen Tabelle. Dies ist darauf zurückzuführen, daß die Vergleichsvektoren, die bei der Aussprache des Buchstabens "d" im Wort "drei" erzeugt worden sind, zu größeren Abweichungen im Wortmodell 12 führen. Zu Beginn der Bearbeitung des Vergleichsvektors n gilt für die Hilfsabweichungsmaße H4=20, H5=26 und H6=28. Für den Vergleichsvektor n werden lokale Abweichungsmaße 14=6, 15=1 und 16=7 für die Abweichung vom Referenzvektor B, r2 bzw. ei2 berechnet.

Die Berechnung der neuen Hilfsabweichungsmaße H4 bis H6 für die Bearbeitung des nächsten Vergleichsvektors n+1 erfolgt mit Hilfe des Wortmodells 12. Das Wortmodell 12 hat die gleiche Struktur wie das Wortmodell 10. Somit erfolgt auch das Berechnen der neuen Hilfsabweichungswerte H4 bis H6 auf die an Hand der oberen Tabelle der Figur 1 bereits erläuterten Art und Weise. Für den Zustand Z4 ergibt sich durch Addition von H4=20 und 14=6 das neue Hilfsabweichungsmaß H4=26. Für den Zustand Z5 ergibt sich das neue Hilfsabweichungsmaß H5=21 durch Addition von H4=20 und 15=1. Das neue Hilfsabweichungsmaß H6=33 für den Zustand Z6 ergibt sich nach einem Vergleich des Hilfsabweichungsmaßes H5=26 für den Zustand Z5 und des Hilfsabweichungsmaßes H6=28 für den Zustand Z6 durch Addition von H5 und 16. Das Hilfsabweichungsmaß H6 des Zustands Z6 für den letzten Vergleichsvektor gibt die Abweichung des gesprochenen Wortes vom mit dem Wortmodell 12 modellierten Referenzwort "Brei" an und wird deshalb als Wortabweichungsmaß 12 bezeichnet.

Die Wortmodelle 10 und 12 modellieren die Referenzworte "drei" bzw. "Brei" mit ähnlichen Wortbestandteilen, nämlich "rei", und haben somit auch ähnliche Wortmodellteile, vgl. Strichlinie 66. Die bisher erläuterte Berechnung der Hilfsabweichungsmaße H1 bis H6 entspricht dem Verfahren, wie es beim Stand der Technik angewendet wird. Um zu gewährleisten, daß bei ähnlichen Wortmodellen, wie z.B. bei den Wortmodellen 10 und 12, nur der sich unterscheidende Teil des jeweiligen Wortmodells zur Auswahl des mit dem einen oder mit dem anderen Wortmodell modellierten Referenzwortes beiträgt, wird die Berechnung der Hilfsabweichungsmaße H2, H3, H5 und H6 wie folgt verändert.

Bei der Berechnung des neuen Hilfsabweichungsmaßes H2 des Zustands Z2 für die Bearbeitung des Vergleichsvektors n+1 wird festgestellt, daß das aktuelle lokale Abweichungsmaß 15=1 für den Zustand Z5 im anderen Wortmodell 12 kleiner ist als das lokale Abweichungsmaß 12 des Zustands Z2. Anstelle des aktuellen lokalen Abweichungsmaßes 12 des Zustands Z2 wird zur Berechnung des neuen Hilfsabweichungsmaßes H2' für diesen Zustand Z2 der Wert des aktuellen lokalen Abweichungsmaßes 15 des Zustands Z5 verwendet. Das heißt, daß anstelle des aktuellen lokalen Abweichungsmaßes 12=2 ein Abweichungsmaß 12'=1 verwendet wird. Für das Hilfsabweichungsmaß H2', das nun zur Bearbeitung des Vergleichsvektors n+1 verwendet wird, ergibt sich dann H2'=11. Beim Berechnen des Hilfsabweichungsmaßes H3 für den Zustand Z3 wird festgestellt, daß der numerische Wert "6" des aktuellen lokalen Abweichungsmaßes 13 für diesen Zustand Z3 einen kleineren Wert hat, als das aktuelle lokale Abweichungsmaß 16 für den ähnlichen Zustand Z6 im anderen Wortmodell 12. Somit muß die oben erläuterte Berechnung nicht modifiziert werden, so daß der neue Hilfsabweichungswert H3=21 unverändert bleibt.

Ebenso wird beim Vergleich des aktuellen lokalen Abweichungsmaßes 15 für den Zustand Z5 festgestellt, daß dessen numerischer Wert "1" kleiner ist als der numerische Wert "2" des aktuellen lokalen Abweichungsmaßes 12 für den ähnlichen Zustand Z2 im Wortmodell 10. Somit erhält das neue Hilfsabweichungsmaß H5 für den Zustand Z5 wie bisher den numerischen Wert "21". Beim Berechnen des neuen Hilfsabweichungsmaßes H6 für den Zustand Z6 wird das lokale Abweichungsmaß 16=7 dieses Zustands dem lokalen Abweichungsmaß 13=6 des ähnlichen Zustands Z3 verglichen. Beim Vergleich wird festgestellt, daß das lokale Abweichungsmaß 13 des Zustands Z3 einen kleineren Wert, nämlich den Wert "6" hat. Bei der Berechnung eines vom neuen Hilfsabweichungsmaß H6 abweichenden neuen Hilfsabweichungsmaßes H6' für den Zustand Z6 und die Bearbeitung des Vergleichsvektors n+1 wird demzufolge zum Wert "26" des alten Hilfsabweichungsmaßes H5 der numerische Wert "6" des übernommenen aktuellen lokalen Abweichungsmaßes 13 addiert, so daß das Hilfsabweichungsmaß H6' den numerischen Wert "32" erhält.

Als Verallgemeinerung gilt, daß vor der Berechnung des neuen Hilfsabweichungswertes, z.B. H2, eines Zustands Z2, zu dem es in anderen Wortmodellen 12 ähnliche Zustände Z5 gibt, alle aktuellen lokalen Abweichungsmaße 12, 15 zu diesen Zuständen Z2, Z5 berechnet werden. Anschließend wird aus diesen Abweichungsmaßen 12, 15 das Abweichungsmaß 15 mit dem kleinsten Wert ermittelt. Der so ermittelte kleinste Wert wird dann bei der Berechnung der neuen Hilfsabweichungswerte H2, H5 in sämtlichen ähnlichen Zuständen Z2, Z5 verwendet.

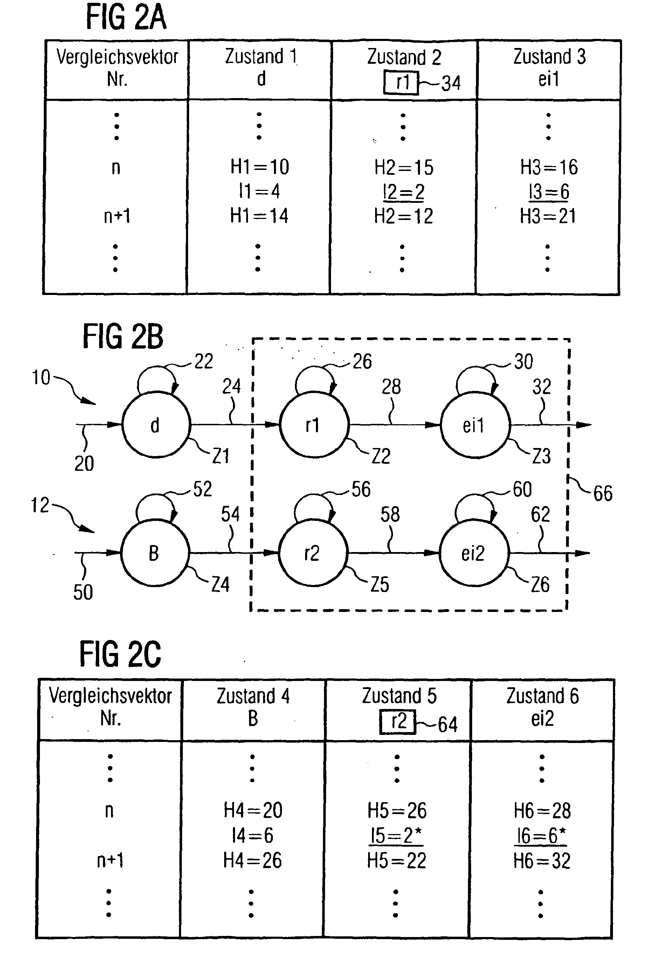

Figur 2 zeigt in Teilen a bis c eine weitere Art der Berücksichtigung ähnlicher Wortbestandteile in den mit den Wortmodellen 10 und 12 modellierten Referenzworten. Dabei werden innerhalb der ähnlichen Wortmodellteile der Wortmodelle 10 und 12, vgl. Strichlinie 66, nur die lokalen Abweichungsmaße 12 und 13 für die Zustände Z2 und Z3 berechnet, so daß die lokalen Abweichungsmaße 15 und 16 für die Zustände Z5 und Z6 nicht berechnet werden müssen. Die Ermittlung der neuen Hilfsabweichungswerte H2 und H3 für das Wortmodell 10 ist in einer Tabelle im Teil a der Figur 2 angegeben, die im wesentlichen mit der Tabelle in Teil a der Figur 1 übereinstimmt. Die Werte für die neuen Hilfsabweichungsmaße H1 bis H3 werden wie beim bekannten Verfahren ermittelt, ohne die lokalen Abweichungsmaße 15 bzw. 16 des Wortmodells 12 zu berücksichtigen.

Der Aufbau einer Tabelle im Teil c der Figur 2 entspricht im wesentlichen dem Aufbau der Tabelle in Teil c der in Figur 1. Aufgrund der Berücksichtigung des Wortmodells 10 bei der Berechnung der Hilfsabweichungswerte H5 und H6 im Wortmodell 12 ergeben sich jedoch Abweichungen in den numerischen Werten. Es sei angenommen, daß für den Vergleichsvektor n die gleichen alten Hilfsabweichungswerte H4 bis H6 gelten, die auch in der unteren Tabelle der Figur 1 angegeben sind, d.h. H4=20, H5=26 und H6=28. Das lokale Abweichungsmaß 14 für den Zustand Z4 wird bei der Bearbeitung des Vergleichsvektors n wiederum zu 14=6 berechnet, so daß auch der numerische Wert des nachfolgend berechneten neuen Hilfsabweichungsmaßes H4 für den Zustand Z4 unverändert bleibt.

Bei der Berechnung des neuen Hilfsabweichungsmaßes H5 für den Zustand Z5 wird das für den zum Zustand Z5 ähnlichen Zustand Z2 berechnete aktuelle lokale Abweichungsmaß 12=2 verwendet, d.h. es erfolgt eine Übernahme des Wertes "2", verdeutlicht durch einen hochgestellten Stern. Durch Addition des numerischen Wertes "2" zum kleineren Wert "20" der beiden vorhergehenden Hilfsabweichungsmaße H4=20 und H5=26 ergibt sich ein neues Hilfsabweichungsmaß H5 für den Zustand Z5 mit dem Wert "22". Dieser Wert unterscheidet sich vom in der unteren Tabelle der Figur 1 berechneten Wert. Der nachteilige Effekt, daß der Vergleichsvektor n bei der Aussprache des Wortbestandteils "r" im Wort "drei" besser zum Referenzvektor r2 für das Referenzwort "Brei" als zum Referenzvektor r1 für das Referenzwort "drei" paßt, wird unterdrückt.

Die Berechnung des neuen Hilfsabweichungsmaßes H6 für den Zustand Z6 erfolgt ähnlich wie die des Hilfsabweichungsmaßes H5 für den Zustand Z5. Durch einfache Übernahme des aktuellen lokalen Abweichungsmaßes 13 aus dem zum Zustand Z6 ähnlichen Zustand Z3 des Wortmodells 10, kann die Berechnung eines lokalen Abweichungsmaßes 16 für den Zustand Z6 unterbleiben. Die Übernahme ist wiederum durch einen hochgestellten Stern angedeutet. Als neues Hilfsabweichungsmaß H6 für den Zustand Z6 ergibt sich H6=32.

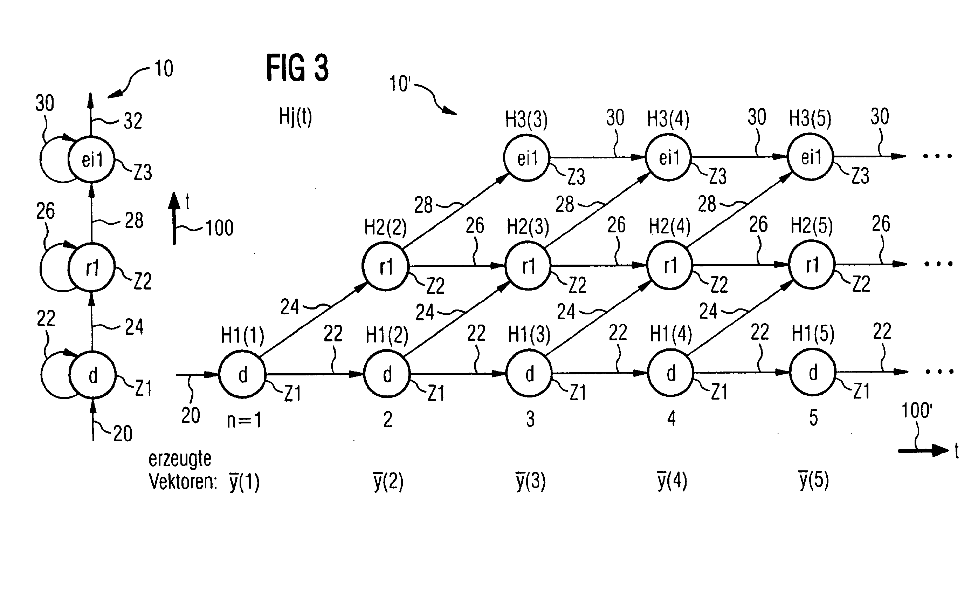

Figur 3 zeigt ein sogenanntes Trellis-Diagramm für das Wortmodell 10 des Wortes "drei". Im linken Teil der Figur 3 ist das Wortmodell 10 nochmals dargestellt. Ein Zeitpfeil 100 verdeutlicht die zeitliche Aufeinanderfolge der Zustände Z1 bis Z3. Innerhalb eines Zustands Z1 bis Z3 kann außerdem beliebig oft ein Selbstübergang stattfinden, vgl. Übergangspfeile 22, 26 und 30. Eine andere Darstellung des Wortmodells 10 läßt sich durch "Abwickeln" des Wortmodells 10 auf einem horizontalen Zeitstrahl erreichen, angedeutet durch einen Zeitpfeil 100'. Ein so entstehendes Wortmodell 10' für das Referenzwort "drei" ist als sogenanntes Trellis-Diagramm dargestellt. Das Trellis-Diagramm hat den Vorteil, daß alle Zustandsabfolgen der Zustände Z1 bis Z3 dargestellt werden. In Figur 3 sind die Hilfsabweichungsmaße H1 bis H3 für Zeitpunkte n=1,...,N eingetragen, dabei ist der jeweilige Zeitpunkt den Hilfsabweichungsmaßen H1 bis H3 in Klammern nachgestellt. Zu jedem Zeitpunkt n=1 bis n=5 sind Vergleichsvektoren $\bar{y}(1)$ bis $\bar{y}(5)$ dargestellt, die aus dem zu verarbeitenden Sprachsignal nach jeweils 10 ms erzeugt worden sind. Der an Hand der Figur 1 erläuterte Viterbi-Algorithmus läßt sich verallgemeinern, wenn Emissionswahrscheinlichkeiten $p(\bar{y}(n)|j)$ verwendet werden, welche die Wahrscheinlichkeit angeben, daß der Vergleichsvektor $\bar{y}(j)$ im Zustand j erzeugt wird. Die Erzeugungswahrscheinlichkeit P für die Folge von Vergleichsvektoren $\bar{y}(1)$ bis $\bar{y}(N)$ kann bei gleichen Übergangswahrscheinlichkeiten zwischen den Zuständen Z1 bis Z3 und beim Verwenden von Normalverteilungen für die auftretenden Wahrscheinlichkeitsfunktionen wie folgt definiert werden:

$$P\big(\bar{y}(1),...,\bar{y}(n),...,\bar{y}(N)\big) = \max \prod_{n=1}^{N} p\big(\bar{y}(n)|j\big) \qquad (1)$$

worin $P(\bar{y}(1),...,\bar{y}(n),...,\bar{y}(N))$ die gesamte Erzeugungswahrscheinlichkeit für die Vergleichsvektorfolge $\bar{y}(1)$ bis $\bar{y}(N)$ ist. Der Operator "max" bedeutet in der Formel (1), daß der Pfad im Trellis-Diagramm des Wortmodells 10' durchlaufen wird, bei dem das Produkt der Erzeugungswahrscheinlichkeiten $p(\bar{y}(n)|j)$ für die nacheinander durchlaufenen Zustände j ein Maximum annimmt.

Die Erzeugungswahrscheinlichkeit $P(\bar{y}(1),...,\bar{y}(N))$ ist dem Wortabweichungsmaß W10 umgekehrt proportional. Nachteilig an dem Ansatz gemäß Formel (1) ist, daß Wortbestandteile, deren Aussprache länger dauert, das berechnete Abweichungsmaß W10 stärker beeinflussen als Wortbestandteile, die innerhalb einer kurzen Zeit ausgesprochen werden. Die Dauer des Aussprechens eines Wortbestandteils ist jedoch für die Unterscheidung nur bedingt relevant. In einem Ausführungsbeispiel des Verfahrens gemäß der Erfindung mit Berücksichtigung der Sprechdauer von Wortbestandteilen wird anstelle des Ansatzes in Formel (1) der folgende Ansatz gewählt:

$$P(\bar{y}(1),\ldots,\bar{y}(N)) = \max \prod_{n=1}^{N} \frac{p(\bar{y}(n)\mid j)}{D(j)} \qquad (2),$$

worin D(j) die mittlere Sprechdauer des Wortbestandteils ist, der durch den Zustand j modelliert wird. Das Ermitteln der mittleren Sprechdauer D(j) erfolgt über viele Äußerungen von verschiedenen Sprechern, z.B. von 500 Sprechern. Die mittlere Sprechdauer ist ein Maß für den Anteil der Sprechdauer des durch den betreffenden Zustand j modellierten Wortbestandteils an der Gesamtsprechdauer des gesprochenen Wortes. Die mittlere Sprechdauer D(j) kann auch als mittlere Verweildauer im Zustand j bezeichnet werden. Dies ist mit Hilfe der Figur 3 dadurch zu erklären, daß für die Zustandsfolge, welche die Formel (1) maximiert, in jedem Zustand eine bestimmte Zahl von Zeitschritten n verweilt wird.

Im Ausführungsbeispiel werden wie bereits erwähnt, für die Emissionswahrscheinlichkeiten $p(\bar{y}(n)|j)$ Normalverteilungen verwendet. Es gilt die Formel:

$$p(\bar{y}(n)|j) = e^{-\frac{1}{2}(\bar{y}(n)-\bar{x}(j))^2} \qquad (3),$$

worin $\bar{x}(j)$ der Referenzvektor für den Zustand j ist. Aufgrund der e-Funktion in der Formel (3) wird mit logarithmierten Erzeugungswahrscheinlichkeiten $P(\bar{y}(1),\ldots,\bar{y}(N))$ gerechnet. Es gilt folgende Beziehung:

$$W10 = -\log\big(P(\bar{y}(1),\ldots,\bar{y}(N))\big) \qquad (4),$$

worin W10 die Wortabweichung und "log" der natürliche Logarithmus sind. Das Minuszeichen in der Formel (4) führt dazu, daß aus der Maximierung eine Minimierung wird, so daß sich Rechenvorteile ergeben.

Durch Einsetzen der Formel (2) in die Formel (4) ergibt sich:

$$W10 = \min \sum_{n=1}^{N} -\log \frac{p(\bar{y}(n)|j)}{D(j)} \qquad (5).$$

Weiterhin folgt durch Einsetzen der Formel (3) in die Formel (5):

$$W10 = \min \sum_{n=1}^{N}\left((\frac{1}{2}(\bar{y}(n)-\bar{x}(j))^2 + \log(D(j))\right) \qquad (6),$$

bzw.:

$$W10 = \min \sum_{n=1}^{N}\left(\frac{1}{2}\bar{y}(n)^2 + \frac{1}{2}\bar{x}(j)^2 - \bar{x}(j)\cdot\bar{y}(n) + \log(D(j))\right) \qquad (7).$$

Die Berechnung der Formel (7) läßt sich vereinfachen, weil gilt:

$$\frac{1}{2}\overline{x}(j)^2 = CONST\_1(j) \qquad\qquad (8).$$

Die Konstanten CONST_1(j) für die Zustände j=1, 2, 3 werden im voraus aus den zum jeweiligen Zustand gehörenden Referenzvektor $\overline{x}$(j) berechnet und bleiben während der Durchführung des gesamten Verfahrens unverändert.

Es gilt weiterhin:

$$\log(D(j)) = CONST\_2(j) \qquad\qquad (9).$$

Die Konstanten CONST_2(j) werden ebenfalls im voraus für die Zustände j ermittelt, nachdem die mittlere Sprechdauer D(j) für den jeweiligen Zustand ermittelt worden ist.

Durch Addition der jeweiligen Konstanten j gemäß der Formel:

$$CONST\_1(j) + CONST\_2(j) = CONST\_3(j) \qquad\qquad (10)$$

ergeben sich Konstanten CONST_3(j) für die jeweiligen Zustände j. Durch Verwenden der Formeln (8) bis (10) folgt aus der Formel (7) die folgende Formel:

$$W10 = \min \sum_{n=1}^{N}\left(\frac{1}{2}\overline{y}(n)^2 - \overline{x}(j)\cdot\overline{y}(n) + CONST\_3(j)\right) \qquad\qquad (11).$$

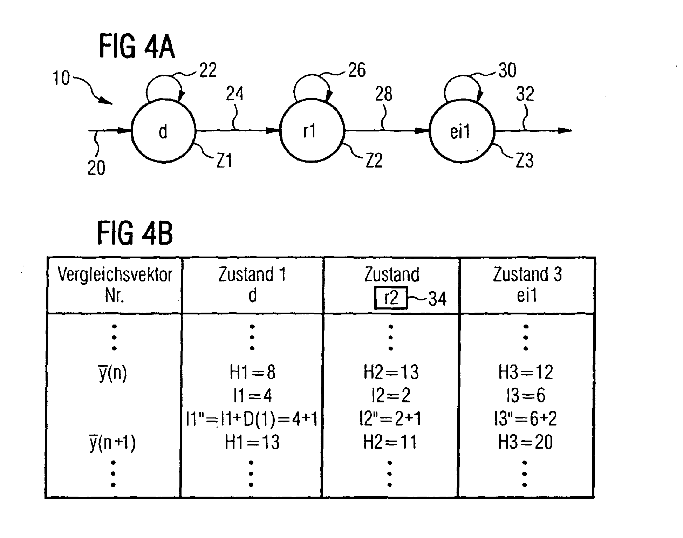

Figur 4 zeigt in einem Teil b die Berechnung von Hilfsabweichungsmaßen H1 bis H3 für das in Teil a gezeigte Wortmodell 10 des Referenzwortes "drei" unter Berücksichtigung von mittleren Sprechdauern D(j). Das Wortähnlichkeitsmaß W10 wird gemäß Formel (11) mit dem bereits an Hand der Figuren 1 und 2 erläuterten vereinfachten Viterbi-Algorithmus berechnet. Unterhalb des Wortmodells 10 ist in Figur 4 eine Tabelle gezeigt, in deren linke Spalte die aktuell bearbeiteten Vergleichsvektoren $\overline{y}$(n),$\overline{y}$(n+1) eingetragen sind. Die zweite Spalte der Tabelle bezieht sich auf den Zustand Z1 mit dem Referenzvektor d. Die dritte Spalte betrifft Werte, die für den Zustand Z2, d.h. mit Hilfe des Referenzvektors r1, berechnet werden. Die rechte Spalte der Tabelle enthält Werte für den Zustand Z3, d.h. den Referenzvektor ei1.

Beim Bearbeiten des Vergleichsvektors $\overline{y}$(n) werden die in der Zeile dieses Vergleichsvektors dargestellten alten Hilfsabweichungsmaße H1=8, H2=13 und H3=12 verwendet. Es sei wiederum angenommen, daß der Vergleichsvektor $\overline{y}$(n) aus einem Sprachsignalabschnitt erzeugt worden ist, der bei der Aussprache des Wortbestandteils "r" im Wort "drei" entstanden ist, vgl. Hervorhebung 34.

Aus dem Vergleichsvektor $\overline{y}$(n) und dem Referenzvektor d wird ein aktuelles lokales Abweichungsmaß 11=4 in Übereinstimmung mit Formel (11) berechnet, indem die Summe aus den ersten beiden Thermen in dem Klammerausdruck der Formel (11) gebildet wird und anschließend noch die Konstante CONST_1(1) addiert wird. Ein modifiziertes aktuelles lokales Abweichungsmaß 11'', welches auch die mittlere Sprechdauer D(1) berücksichtigt, hat den numerischen Wert "5", da für den Zustand Z1 gelten soll: D(1)=1.

Auf gleiche Art wird aus dem Vergleichsvektor $\overline{y}$(n) und dem Referenzvektor r1 ein aktuelles lokales Abweichungsmaß 12=2 ermittelt. Anschließend wird mit der mittleren Sprechdauer D(2)=1 für den Zustand Z2 das modifizierte Abweichungsmaß 12''=3 ermittelt. Ein aktuelles lokales Abweichungsmaß 13 für den Zustand Z3 hat den numerischen Wert "6". Die mittlere Sprechdauer für den Wortbestandteil "ei" im Referenzwort "drei" ist länger als die mittlere Sprechdauer für die Wortbestandteile "d" bzw. "r". Im Ausführungsbeispiel gilt deshalb D(3)=2. Damit ergibt sich ein modifiziertes Abweichungsmaß 13''=8.

Die neuen Hilfsabweichungsmaße H1 bis H3 für die Bearbeitung des nächsten Vergleichsvektors $\overline{y}$(n+1) werden unter Berücksichtigung des Wortmodells 10 ermittelt. Als vorhergehender Zustand für den Zustand Z1 kommt bei der Aussprache des Wortbestandteils "r" nur der Zustand Z1 selbst in Frage. Deshalb wird das modifizierte Abweichungsmaß 11' zum alten Hilfsabweichungsmaß H1 addiert, um das neue Hilfsabweichungsmaß H1=13 zu erhalten.

Der Zustand Z2 kann ausgehend vom Zustand Z1 über den Übergangspfeil 24 oder ausgehend vom Zustand Z2 über den Übergangspfeil 26 erreicht werden. Um die Minimierung gemäß der Formel (11) durchzuführen, wird für die Berechnung des neuen Hilfsabweichungsmaßes H2 das alte Hilfsabweichungsmaß H1=8 verwendet, da es einen kleineren numerischen Wert als das alte Hilfsabweichungsmaß H2=13 des Zustands Z2 hat. Für das neue Hilfsabweichungsmaß H2 ergibt sich durch Addition des alten Hilfsabweichungsmaßes H1=8 und des modifizierten aktuellen lokalen Abweichungsmaßes 12' der numerische Wert "11".

Auf ähnliche Art ergibt sich für den Zustand Z3 aus dem Wortmodell 10, daß als vorhergehende Zustände nur der Zustand Z2 oder der Zustand Z3 selbst in Frage kommen. Der Vergleich des alten Hilfsabweichungsmaßes H2=13 des Zustands Z2 und des alten Hilfsabweichungsmaßes H3=12 des Zustands Z3 ergibt, daß das alte Hilfsabweichungsmaß H3 kleiner ist. Deshalb wird zu diesem Hilfsabweichungsmaß H3=12 das modifizierte aktuelle lokale Abweichungsmaß 13'=8 addiert, so daß sich für das neue Hilfsabweichungsmaß H3 der numerische Wert "20" ergibt.

Auf analoge Weise wurden bereits die vor dem Vergleichsvektor $\overline{y}(n)$ liegenden Vergleichsvektoren bearbeitet. Auch alle nach dem Vergleichsvektor $\overline{y}(n)$ folgenden Vergleichsvektoren werden nach dem an Hand der Figur 4 erläuterten Rechenschema bearbeitet. Das Hilfsabweichungsmaß H3 für den letzten Vergleichsvektor ist dann das Wortabweichungsmaß W10, das die Abweichung des gesprochenen Wortes vom mit dem Wortmodell 10 modellierten Referenzwort "drei" angibt.

## Patentansprüche

1. Verfahren zur Verarbeitung eines Sprachsignals,
   bei dem für mindestens ein Referenzwort eines vorgegebenen Wortschatzes ein Wortmodell (10, 10') mit aufeinanderfolgenden Zuständen (Z1 bis Z3) für die Wortbestandteile festgelegt wird, vorzugsweise ein sogenanntes "Hidden-Markov"-Modell,
   wobei zu jedem Zustand (Z1 bis Z3) mindestens ein Referenzvektor (d, r1, ei1) gehört, dessen Komponenten die Ausprägung von Merkmalen in einem zum jeweiligen Zustand (Z1 bis Z3) gehörenden Referenzsignal angeben,
   ein beim Sprechen eines Wortes erzeugtes Sprachsignal in aufeinanderfolgende Signalabschnitte unterteilt wird, für die Vergleichsvektoren (n, n+1) erzeugt werden, deren Komponenten die Ausprägung der Merkmale im jeweiligen Signalabschnitt angeben,
   die Vergleichsvektoren (n, n+1) in der zeitlichen Reihenfolge ihrer Signalabschnitte nacheinander bearbeitet werden, wobei für vorbestimmte Zustände (Z1 bis Z3) aus dem zugehörigen Referenzvektor (d, r1, ei1) und aus dem aktuellen Vergleichsvektor (n) und ein aktuelles lokales Abweichungsmaß (11 bis 13, 11'' bis 13'') berechnet wird, dessen Wert mit zunehmender Abweichung des Vergleichsvektors (n) vom Referenzvektor (d, r1, ei1) zunimmt,
   und wobei für jeden Zustand (Z1 bis Z3) ein aktuelles Hilfsabweichungsmaß (H1 bis H3) berechnet wird, das den Unterschied eines zum bisher bearbeiteten Teil des Sprachsignals gehörenden Teilworts zu einem Referenzteilwort angibt, welches durch die im Wortmodell bis zum jeweiligen Zustand (Z1 bis Z3) auftretenden Zustände (Z1 bis Z3) modelliert wird,
   und bei dem das zuletzt erzeugte Hilfsabweichungsmaß (H3) des letzten Zustands des Wortmodells (10, 10') die Abweichung des gesprochenen Worts zum durch das Wortmodell (10, 10') modellierten Referenzwort angibt,
   **dadurch gekennzeichnet, daß** beim Berechnen der aktuellen lokalen Abweichungsmaße (11'' bis 13'') mindestens eines ausgewählten Zustands eine mittlere Verweildauer (D(j)) berücksichtigt wird, die ein Maß für den Anteil der Sprechdauer des durch den ausgewählten Zustand (Z1 bis Z3) modellierten Wortbestandteils an der Gesamtsprechdauer des gesprochenen Wortes ist,
   wobei die mittlere Verweildauer (D(j)) jeweils eine über eine Vielzahl von Sprachmustern gemittelte Konstante für den jeweiligen Wortbestandteil des Referenzwortes ist.

2. Verfahren nach Anspruch 1, **dadurch gekennzeichnet, daß** die Verweildauer (D(j)) eine mittlere Verweildauer ist, die vorzugsweise durch Messungen ermittelt worden ist.

3. Verfahren nach Anspruch 1 oder 2, **dadurch gekennzeichnet, daß** sämtliche Zustände (Z1 bis Z3) des Wortmodells (10, 10') ausgewählt werden.

4. Sprachverarbeitungseinheit, die so gesteuert is, um jeden Schritt eines Verfahrens nach einem der Ansprüche 1 bis 3 auszuführen.

## Claims

1. Method for processing a speech signal,
   in which, for at least one reference word of a predetermined vocabulary, a word model (10, 10') with successive states (Z1 to Z3) for the word components is specified, this being preferably what is referred to as a "hidden Markov" model,

in which at least one reference vector (th, r1, eel) is associated with each state (Z1 to Z3) and its components specify the expression of features in a reference signal which is associated with the respective state (Z1 to Z3),

a speech signal which is generated when a word is spoken is divided into successive signal sections for which comparison vectors (n, n+1) whose components specify the expression of the features in the respective signal section are generated,

the comparison vectors (n, n+1) are processed in succession in the chronological order of their signal sections,

in which a current local degree of deviation (11 to 13, 11" to 13'') is calculated for predetermined states (Z1 to Z3) from the associated reference vector (th, r1, eel) and from the current comparison vector (n), the value of which degree of deviation (11 to 13, 11'' to 13'') increases as a deviation of the comparison vector (n) from the reference vector (th, r1, eel) increases,

and in which a current auxiliary degree of deviation (H1 to H3) is calculated for each state (Z1 to Z3), said auxiliary degree of deviation (H1 to H3) specifying the difference between a component word associated with the previously processed part of the speech signal, and a reference component word which is modelled by the states (Z1 to Z3) occurring in the word model up to the respective state (Z1 to Z3),

and in which that auxiliary degree of deviation (H3) of the last state of the word model (10, 10') which is generated last specifies the deviation between the spoken word and the reference word which is modelled by the word model (10, 10'),

**characterized in that**, during the calculation of the current local degrees of deviation (11'' to 13'') of at least one selected state, an average duration (D(j)) is taken into account which is a measure of the proportion which the spoken length of the word component modelled by the selected state (Z1 to Z3) forms of the overall spoken length of the spoken word, the average duration (D(j)) respectively being a constant, averaged over a multiplicity of speech patterns, for the respective word component.

2. Method according to Claim 1, **characterized in that** the duration (D(j)) is an average duration which has preferably been determined by means of measurements.

3. Method according to Claim 1 or 2, **characterized in that** all the states (Z1 to Z3) of the word model (10, 10') are selected.

4. Speech processing unit which is controlled in such a way as to carry out each step of a method according to one of Claims 1 to 3.

## Revendications

1. Procédé de traitement d'un signal vocal, dans lequel

pour au moins un mot de référence d'un vocabulaire préfini, on spécifie un modèle de mot (10, 10') avec des états successifs (Z1 à Z3) pour les éléments de mot, de préférence un modèle dit "Hidden-Markov",

à chaque état (Z1 à Z3) appartient au moins un vecteur de référence (d, r1, ei1) dont les composantes indiquent l'empreinte de caractéristiques dans un signal de référence appartenant à l'état respectif (Z1 à Z3),

on divise un signal vocal produit lors de la prononciation d'un mot en tronçons de signal successifs pour lesquels sont produits des vecteurs de comparaison (n, n + 1) dont les composantes indiquent l'empreinte des caractéristiques dans le tronçon de signal respectif,

on traite successivement les vecteurs de comparaison (n, n + 1) dans l'ordre chronologique de leurs tronçons de signal,

pour des états prédéterminés (Z1 à Z3), on calcule à partir du vecteur de référence associé (d, r1, ei1) et du vecteur de comparaison actuel (n) une mesure d'écart locale actuelle (11 à 13, 11'' à 13'') dont la valeur augmente lorsque l'écart entre le vecteur de comparaison (n) et le vecteur de référence (d, r1, ei1) augmente,

pour chaque état (Z1 à Z3), on calcule une mesure d'écart auxiliaire actuelle (H1 à H3) qui indique la différence entre un mot partiel appartenant à une partie traitée jusqu'ici du signal vocal et un mot partiel de référence qui est modélisé par les états (Z1 à Z3) apparaissant dans le modèle de mot jusqu'à l'état respectif (Z1 à Z3),

et la dernière mesure d'écart auxiliaire produite (H3) du dernier état du modèle de mot (10, 10') indique l'écart du mot prononcé par rapport au mot de référence modélisé par le modèle de mot (10, 10'),

**caractérisé par le fait que**, lors du calcul des mesures d'écart locales actuelles (11'' à 13'') d'au moins un état sélectionné, on prend en compte une durée de séjour moyenne (D (j)) qui est une mesure de la proportion de la durée de parole de l'élément de mot modélisé par l'état sélectionné (Z1 à Z3) dans la durée de parole totale du mot prononcé,
la durée de séjour moyenne (D (j)) étant à chaque fois une constante, dont a été calculée la moyenne sur plusieurs modèles vocaux, pour l'élément de mot respectif du mot de référence.

2. Procédé selon la revendication 1, **caractérisé par le fait que** la durée de séjour (D (j)) est une durée de séjour moyenne qui a été déterminée de préférence par des mesures.

3. Procédé selon la revendication 1 ou 2, **caractérisé par le fait que** l'on sélectionne tous les états (Z1 à Z3) du modèle de mot (10, 10').

4. Unité de traitement de la parole qui est commandée de manière à mettre en oeuvre chaque étape d'un procédé selon l'une des revendications 1 à 3.

## FIG 1A

| Vergleichsvektor Nr. | Zustand 1 d | Zustand 2 $\boxed{r1}$ ~34 | Zustand 3 ei1 |
|---|---|---|---|
| ⋮ | ⋮ | ⋮ | ⋮ |
| n | H1=10 I1=4 | H2=15 I2=2 (I2'=1) | H3=16 $\underline{I3=6}$ |
| n+1 | H1=14 | H2=12 (H2'=11) | H3=21 |
| ⋮ | ⋮ | ⋮ | ⋮ |

## FIG 1B

## FIG 1C

| Vergleichsvektor Nr. | Zustand 4 B | Zustand 5 $\boxed{r2}$ ~64 | Zustand 6 ei2 |
|---|---|---|---|
| ⋮ | ⋮ | ⋮ | ⋮ |
| n | H4=20 I4=6 | H5=26 $\underline{I5=1}$ | H6=28 I6=7 (I6'=6) |
| n+1 | H4=26 | H5=21 | H6=33 (H6'=32) |
| ⋮ | ⋮ | ⋮ | ⋮ |

# FIG 2A

| Vergleichsvektor Nr. | Zustand 1 d | Zustand 2 r1 ~34 | Zustand 3 ei1 |
|---|---|---|---|
| $\vdots$ | $\vdots$ | $\vdots$ | $\vdots$ |
| n | $H1=10$ $I1=4$ | $H2=15$ $\underline{I2=2}$ | $H3=16$ $\underline{I3=6}$ |
| n+1 | $H1=14$ | $H2=12$ | $H3=21$ |
| $\vdots$ | $\vdots$ | $\vdots$ | $\vdots$ |

# FIG 2B

# FIG 2C

| Vergleichsvektor Nr. | Zustand 4 B | Zustand 5 r2 ~64 | Zustand 6 ei2 |
|---|---|---|---|
| $\vdots$ | $\vdots$ | $\vdots$ | $\vdots$ |
| n | $H4=20$ $I4=6$ | $H5=26$ $\underline{I5=2^*}$ | $H6=28$ $\underline{I6=6^*}$ |
| n+1 | $H4=26$ | $H5=22$ | $H6=32$ |
| $\vdots$ | $\vdots$ | $\vdots$ | $\vdots$ |

FIG 3

## FIG 4A

## FIG 4B

| Vergleichsvektor Nr. | Zustand 1 d | Zustand r2 ~34 | Zustand 3 ei1 |
|---|---|---|---|
| ⋮ | ⋮ | ⋮ | ⋮ |
| $\bar{y}(n)$ | $H1 = 8$ | $H2 = 13$ | $H3 = 12$ |
| | $I1 = 4$ | $I2 = 2$ | $I3 = 6$ |
| | $I1'' = I1 + D(1) = 4+1$ | $I2'' = 2+1$ | $I3'' = 6+2$ |
| $\bar{y}(n+1)$ | $H1 = 13$ | $H2 = 11$ | $H3 = 20$ |
| ⋮ | ⋮ | ⋮ | ⋮ |